# EUROPEAN PATENT APPLICATION

(11) **EP 1 422 458 A1**
(43) Date of publication of application: **26.05.2004**
(21) Application number: 03380260.4
(22) Date of filing: 07.11.2003
(51) Int. Cl.: F16L 3/24, F16B 21/02, F16B 37/04

(54) **Device for attaching brackets for tubular piping to profiled elements**

(30) Priority: 20.11.2002 ES 200202661
(71) Applicant: Isofix, S.L., 08192 Sant Quirze Del Valles (ES)
(72) Inventor: Yanguas Llobet, David, 08192 Sant Quirze del Valles (ES)
(74) Representative: SUGRANES - VERDONCES - FERREGÜELA

(57) **Abstract**

Device for attaching brackets for tubular piping to profiled elements (8), the brackets comprising a main body (1) with a base (2), which joins the bracket to a given surface; and two arms (3,4), said arms containing several fastening devices (6), so that there is a defined area (5) inside the bracket which is suitable for accommodating a tubular pipe, the base (2) comprising a prismatic extension (7), which is narrower than a recess in the profiled elements (8) where a bracket is to be attached, and with a cross-section in the form of a double eccentric, allowing the bracket to be attached to the profiled elements.

## Description

### Technical field of the invention

The invention refers to a device for attaching to track-guides for brackets which are used, in particular, for fixing tubular piping to walls, such as pipes in heating or plumbing installations, and which can also be used, in general, for any other type of piping for liquids. Said brackets for tubular piping comprise a main body with a base which joins the bracket to a given surface; and two arms and several fastening devices, defining an area inside the bracket which is suitable for accommodating tubular piping.

### Background of the invention

There are many embodiments of brackets of the type which comprise several means of accommodating tubular piping and a base for attaching to track-guides mounted on walls, roofs or any other sealed surface, so that the brackets remain fixed to the track-guides.

Different embodiments of brackets exist today with a base suitable for different types of guide, but one outstanding fact remains that the majority of brackets known to date cannot be attached at the front, since they have no means of being pressed into place at the front, for example, on the inside of said guides, and can only be attached at the side, so that if a bracket needs to be added consecutively, alongside others on a guide, all the brackets must be moved along the inside of the guide, until the one at the end sticks out, to allow more brackets to be added; this manoeuvre therefore requires the tubes to be detached from each of the brackets inside the guide, so that they can be released and moved.

### Explanation of the invention

With the object of finding a solution to the problems disclosed above, deriving from the lack of means available for front attachment to track-guides, a device has been created for brackets with a new structure, while still observing all the other requirements in terms of technological performance, providing all the functions disclosed above.

The device for attaching to track-guides for use with brackets for tubular piping, being the object of the invention, is characterized because it comprises a base with a prismatic extension which is narrower than the track-guides at the point of attachment, so that it can be attached to them at the front, and because it has a cross-section in the form of a double eccentric, with at least the first two opposite portions being round, so that the part inside the track-guide can be turned to fasten it, and with second portions, alternated with the first ones, which have a cantilever cam, with a groove in the upper part suitable for accommodating the flanges of the guide, thus forcing the part to be tightly fastened to the track-guide by pressing it against the walls of the latter, once the arm has been turned to position it correctly.

### Brief description of the drawings

The attached drawings give an example of a non-limitative embodiment of the bracket for tubular piping, being the object of the invention herein. In said drawings;
- Fig.1: shows a perspective front view of a bracket with a base, in accordance with the invention herein;
- Fig. 2: shows a ground view of a bracket with the arms in an open position;
- Fig. 3: shows a side view of a bracket with the base, for use with different guides; and
- Fig. 4: shows the steps to be followed for the front attachment of a bracket to a guide track.

### Detailed description of the drawings

Said drawings demonstrate in detail the different parts that make up a bracket and how it is used with a track-guide and, more specifically, a case demonstrating a bracket with the base, according to the invention.

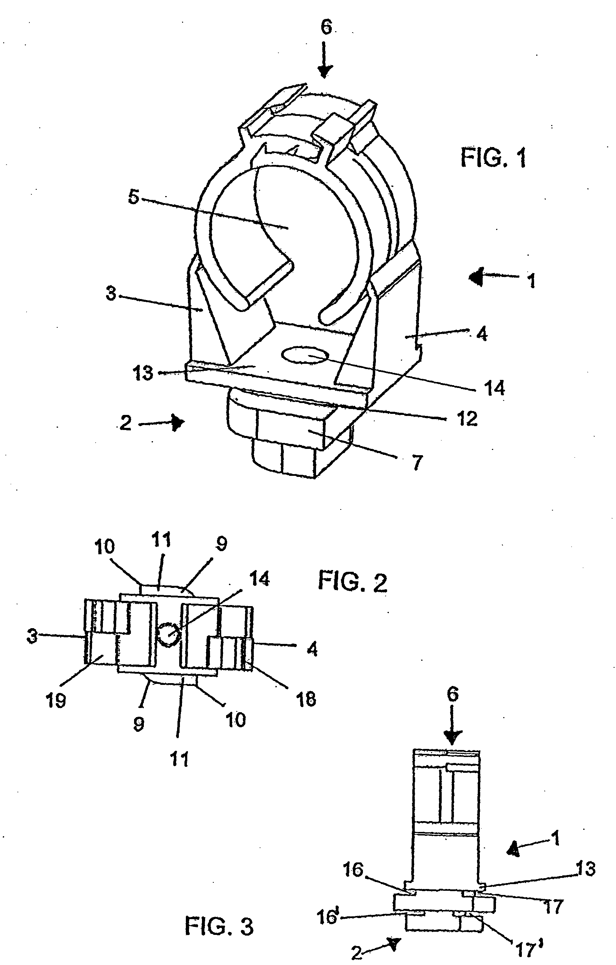

As demonstrated in Figs. 1 to 4, a bracket with the object of the invention herein, consists of a main body 1 with a base 2; and two arms 3 and 4, which together form an inner space 5 suitable for accommodating tubular piping. Said main body 1 also comprises several fastening devices 6, to secure the position of the tubular pipes.

The base 2, has a rectangular part 13 and a prismatic extension 7, which is the point where the bracket is attached to the surface to which it must be fixed.

The devices for fastening the bracket comprise an elongated orifice 14 which goes through the base 2 and the whole prismatic extension 7, as can be seen in Fig. 2, and whose function is to enable quick attachment, using an external tool to fit a fixing element such as a screw, as an alternative to just fastening by track-guides 8. In principle, the orifice 14 has no threading inside and, in this way, provides a stronger screw joint with the bracket.

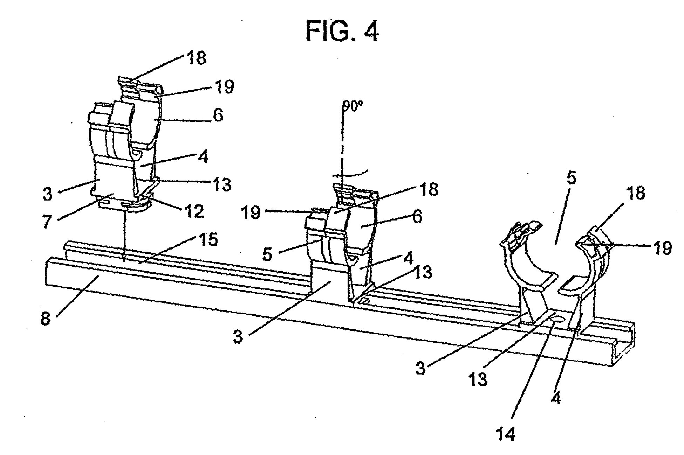

Fig. 4 shows the bracket mounted on a track-guide 8. The prismatic extension 7 is narrower than the track-guides to which the bracket may be attached, so that the bracket can be attached to the front of the track-guides 8, and said prismatic extension 7, has a cross-section in the form of a double eccentric, with at least the first two opposite portions being round 9 to enable the part inside the track-guide 8 to be fastened by turning it, and with second portions 10, alternated with the first ones, which have a cantilever cam 11, with a groove 12 in the upper part, suitable for accommodating the flanges 15 of the guide 8, thus producing a tighter fastening of the part to the track-guide 8 by pressing it against the walls of the latter, once the arm has been turned to position it correctly. Fig.2 shows a ground view of a bracket with an extension 7 protruding from its base 2, with opposite round portions 9, and portions 10 with a cantilever cam 11, so that pressure is exerted on the walls of the guide tracks 8 by the section protruding from the base 2.

In the embodiment, shown as an example in Fig. 3, the aforementioned prismatic extension 7 has grooves 16, 16' and 17, 17' running lengthways for sliding, similar to grooves 12 suitable for accommodating the flanges 15 of a track-guide 8. These grooves have respective pairs, so that those at the same level are paired 16-17 and 16'-17', each pair being of different depth, making it easy to mount the bracket on track-guides 8 of different thickness. The embodiment, given in the example, enables the brackets to be fastened to track-guides 8 which are as thick as, or thicker than, the width of the base 2.

In the cases given, the fastening devices 6 are located at the ends of the arms 3 and 4, and have two toothed elements 18 and 19, in this case, there are more than one and they are facing opposite each other. In all cases, the device for attaching to track-guides, according to the purpose of the invention, can be used with brackets of any shape and size. In the same way as any other embodiment that enables a single bracket to be coupled with track-guides of different thickness, this is also the object of the invention herein.

## Claims

1. Device for attaching to track-guides for use with brackets for tubular piping, of the type comprising a main body (1) with a base (2), which joins the bracket to a given surface; two arms (3, 4), which form an inner space inside (5) suitable for accommodating a tubular pipe; and several fastening devices (6), characterized because there is a base with a prismatic extension (7) which is narrower than the track-guides (8), so that it can be attached to the front of said track-guides, and because said prismatic extension has a cross-section in the form of a double eccentric, with at least the first two opposite portions being round (9) to enable the part inside the track-guide to be fastened by turning it; and with second portions (10), alternated with the first ones, which have a cantilever cam (11) with a groove (12) in the upper part, suitable for accommodating the flanges (15) of the guide, thus forcing the part to be tightly fastened to the track-guide by pressing it against the walls of the latter, once the bracket has been turned to position it correctly.
